# EUROPEAN PATENT SPECIFICATION

(11) **EP 1 027 823 B1**
(45) Date of publication and mention of the grant of the patent: **21.07.2004**
(21) Application number: 00200399.4
(22) Date of filing: 08.02.2000
(51) Int. Cl.: A01J 5/017

(54) **A method of determining the anticipated teat position of an animal**
Verfahren zur Bestimmung der erwarteten Position des Euters eines Tieres
Procédé de détermination de la position prévue du trayon d'un animal

(30) Priority: 09.02.1999 NL 1011255
(43) Date of publication of application: 16.08.2000
(60) Divisional application: 04075401.2
(73) Proprietor: MAASLAND N.V., 3147 PA Maassluis (NL)
(72) Inventor: van 't Land, Aart, 4411 RV Rilland (NL); de Groen, Franciscus Johannes Adrianus, 3225 CB Hellevoetsluis (NL)
(74) Representative: Corten, Maurice Jean F.M.

(56) References cited:
- EP-A- 0 188 303
- EP-A- 0 572 068

## Description

The invention relates to a method of determining the anticipated teat position of an animal, according to the preamble of claim 1.

Such a method is known from EP-A-0188303.

It is an object of the invention to provide an alternative method.

According to the invention this is achieved by the characterizing features of claim 1. These historical data may be collected for example by determining, prior to milking, the actual teat position of the relevant teat by means of a sensor, such as e.g. a laser sensor, and storing same in a memory of a computer.

In accordance with a simple method according to the invention, it is further possible to determine the anticipated teat position at the point of time t3 on the basis of a schedule in which the actual teat position at different points of time is stored. Such a schedule may be made by carrying out measurements on a teat with an empty quarter during e.g. 8 hours. Because of the fact that the quarter is filled with milk, seen in time the actual teat position relative to the reference point will alter. It is also possible to collect said actual teat positions by using a milking robot with a sensor for determining the actual teat position of an animal to be milked. It will be obvious that, before the relevant quarter is milked, first the actual teat position as well as the time elapsed since the last measurement have to be determined and stored in the memory of a computer.

In a preferred embodiment of the invention, after the anticipated teat position has been determined or calculated, said anticipated teat position is used for activating an automatic or semiautomatic device for treating and/or inspecting the relevant teat. Said anticipated teat position is used in particular for roughly positioning the automatic or semiautomatic device for treating the relevant teat. It will be obvious that, when roughly positioning said devices, one should correct the anticipated teat co-ordinates by a correction factor for the purpose of positioning the device remotely from the relevant teat, because the anticipated teat co-ordinates may be equal to the actual teat co-ordinates. After the anticipated teat position has been determined or calculated, according to an inventive feature, the current actual teat position relative to the reference point is measured by means of a sensor, such as e.g. a laser or an ultrasonic sensor, and possibly stored in a memory. By means of the current actual teat position it is possible to bring the automatic or semiautomatic device for treating the relevant teat accurately towards the teat for the purpose of subsequently treating same. In this manner a fine-positioning of said device is effected. The current actual teat position may further be used for completing the above-mentioned schedule or for adjusting the algorithm.

According to an inventive feature, the anticipated teat position is used for positioning a teat cup of a milking robot.

According to another inventive feature, the anticipated teat position is used for positioning a cleaning device for cleaning the relevant teat. Said cleaning device may constitute part, of course, of a milking robot.

According to again another inventive feature, the anticipated teat position is used for positioning a foremilking machine for foremilking the relevant teat. Said foremilking machine may also constitute part of a milking robot. It will be obvious that the above-mentioned methods may be applied for all the teats of the relevant animal.

In accordance with another embodiment of the invention, it is also possible to determine the anticipated teat position relative to the reference point on the basis of the anticipated milk yield of the relevant animal since the last milking. In order to determine the anticipated teat position, a schedule is made or input in the memory, while for the relevant teat the actual teat co-ordinates are measured before milking and the milk yield is measured after milking the udder and/or the udder quarter. Due to the fact that the period of time between two milkings of the relevant animal is usually irregular, the schedule contains a large number of actual teat co-ordinates with the corresponding milk yield. The anticipated milk yield of the relevant animal may be determined on the basis of the actual milk yield. It will be obvious that it is also possible to use, instead of a schedule, an algorithm for determining the anticipated teat position on the basis of the anticipated milk yield and the corresponding actual teat position.

## Claims

1. A method of determining the anticipated teat position of an animal, such as a cow for example, in which method, at least two different points of time t1 and t2, the actual teat position for a teat relative to a reference point is determined and stored in a memory, and in which method, at a point of time t3, the anticipated teat position for the relevant teat relative to the reference point is determined or calculated on the basis of at least the actual teat positions at t1 and t2, **characterized in that** the anticipated teat position at t3 is calculated on the basis of an algorithm which is determined after a number of historical data concerning the actual teat position have been collected at different points of time tx.

2. A method as claimed in claim 1, **characterized in that** the anticipated teat position at t3 is determined on the basis of a schedule in which the actual teat position at different points of time is stored.

3. A method as claimed in any one of the preceding claims, **characterized in that,** after the anticipated teat position has been determined or calculated, said anticipated teat position is used for activating an automatic or semiautomatic device for treating and/or inspecting the relevant teat.

4. A method as claimed in claim 3, **characterized in that,** after the anticipated teat position has been determined or calculated, said anticipated teat position is used in particular for roughly positioning the automatic or semiautomatic device for treating the relevant teat.

5. A method as claimed in any one of the preceding claims, **characterized in that**, after the anticipated teat position has been determined or calculated, the current actual teat position relative to the reference point is measured by means of a sensor, such as e.g. a laser or an ultrasonic sensor, and possibly stored in a memory.

6. A method as claimed in any one of claims 3 to 5, **characterized in that** the anticipated teat position is used for positioning a teat cup of a milking robot.

7. A method as claimed in any one of claims 3 to 6, **characterized in that** the anticipated teat position is used for positioning a cleaning device for cleaning the relevant teat.

8. A method as claimed in any one of claims 3 to 7, **characterized in that** the anticipated teat position is used for positioning a foremilking machine for foremilking the relevant teat.

## Patentansprüche

1. Verfahren zum Ermitteln der voraussichtlichen Zitzenposition eines Tieres, wie z. B. einer Kuh, wobei bei dem Verfahren zu mindestens zwei unterschiedlichen Zeitpunkten t1 und t2 die aktuelle Zitzenposition für eine Zitze relativ zu einem Bezugspunkt ermittelt und in einem Speicher gespeichert wird, und wobei bei dem Verfahren zu einem Zeitpunkt t3 die voraussichtliche Zitzenposition für die betreffende Zitze relativ zu dem Bezugspunkt ermittelt oder auf der Basis zumindest der aktuellen Zitzenpositionen zu den Zeitpunkten t1 und t2 berechnet wird,
**dadurch gekennzeichnet, daß** die voraussichtliche Zitzenposition zum Zeitpunkt t3 auf der Basis eines Algorithmus berechnet wird, der festgelegt wird, nachdem eine Anzahl von historischen Daten bezüglich der aktuellen Zitzenposition zu unterschiedlichen Zeitpunkten tx gesammelt worden ist.

2. Verfahren nach Anspruch 1,
**dadurch gekennzeichnet, daß** die voraussichtliche Zitzenposition zum Zeitpunkt t3 auf der Basis einer Tabelle ermittelt wird, in der die aktuelle Zitzenposition zu unterschiedlichen Zeitpunkten gespeichert ist.

3. Verfahren nach einem der vorhergehenden Ansprüche,
**dadurch gekennzeichnet, daß** nach dem Ermitteln oder Berechnen der voraussichtlichen Zitzenposition die voraussichtliche Zitzenposition dazu verwendet wird, eine automatische oder halbautomatische Vorrichtung zum Behandeln und/oder Überprüfen der betreffenden Zitze zu aktivieren.

4. Verfahren nach Anspruch 3,
**dadurch gekennzeichnet, daß** nach dem Ermitteln oder Berechnen der voraussichtlichen Zitzenposition die voraussichtliche Zitzenposition insbesondere dazu verwendet wird, die automatische oder halbautomatische Vorrichtung zum Behandeln der betreffenden Zitze grob zu positionieren.

5. Verfahren nach einem der vorhergehenden Ansprüche,
**dadurch gekennzeichnet, daß** nach dem Ermitteln oder Berechnen der voraussichtlichen Zitzenposition die gegenwärtige aktuelle Zitzenposition relativ zu dem Bezugspunkt mit Hilfe eines Sensors, wie z. B. einem Laserstrahl- oder einem Ultraschallsensor, gemessen und eventuell in einem Speicher gespeichert wird.

6. Verfahren nach einem der Ansprüche 3 bis 5,
**dadurch gekennzeichnet, daß** die voraussichtliche Zitzenposition dazu verwendet wird, einen Zitzenbecher eines Melkroboters zu positionieren.

7. Verfahren nach einem der Ansprüche 3 bis 6,
**dadurch gekennzeichnet, daß** die voraussichtliche Zitzenposition dazu verwendet wird, eine Reinigungsvorrichtung zum Reinigen der betreffenden Zitze zu positionieren.

8. Verfahren nach einem der Ansprüche 3 bis 7,
**dadurch gekennzeichnet, daß** die voraussichtliche Zitzenposition dazu verwendet wird, eine Vormelkmaschine zum Vormelken der betreffenden Zitze zu positionieren.

## Revendications

1. Procédé de détermination de la position d'un trayon d'un animal, par exemple une vache, procédé dans lequel, en au moins deux points différents dans le temps t1 et t2, la position réelle du trayon pour une traite par rapport à un point de référence est déterminée et stockée dans une mémoire, et dans lequel, en un point dans le temps t3, la position anticipée du trayon pour la traite correspondante par rapport à ce point de référence est déterminée ou calculée d'après au moins les positions réelles du trayon en t1 et t2, **caractérisé en ce que** la position anticipée du trayon en t3 est calculée d'après un algorithme qui est déterminé après qu'un certain nombre de données historiques concernant la position réelle du trayon ont été collectées en différents points dans le temps tx.

2. Procédé selon la revendication 1, **caractérisé en ce que** la position anticipée du trayon en t3 est déterminée d'après un graphique dans lequel est stockée la position réelle du trayon en différents points dans le temps.

3. Procédé selon l'une quelconque des revendications précédentes, **caractérisé en ce que**, après que la position anticipée du trayon a été déterminée ou calculée, ladite position anticipée du trayon est utilisée pour activer un dispositif automatique ou semi-automatique de traite et/ou d'inspection de la traite correspondante.

4. Procédé selon la revendication 3, **caractérisé en ce que**, après que la position anticipée du trayon a été déterminée ou calculée, ladite position anticipée du trayon est utilisée en particulier pour positionner approximativement le dispositif automatique ou semi-automatique pour la traite correspondante.

5. Procédé selon l'une quelconque des revendications précédentes, **caractérisé en ce que**, après que la position anticipée du trayon a été déterminée ou calculée, la position réelle du trayon par rapport au point de référence est mesurée au moyen d'un capteur tel, par exemple, un capteur laser ou ultrasonique, et stockée éventuellement dans une mémoire.

6. Procédé selon l'une quelconque des revendications 3 à 5, **caractérisé en ce que** la position anticipée du trayon est utilisée pour positionner un gobelet-trayeur d'un robot de traite.

7. Procédé selon l'une quelconque des revendications 3 à 6, **caractérisé en ce que** la position anticipée du trayon est utilisée pour positionner un dispositif de nettoyage pour nettoyer le trayon approprié.

8. Procédé selon l'une quelconque des revendications 3 à 7, **caractérisé en ce que** la position anticipée du trayon est utilisée pour positionner une machine d'élimination du premier jet pour éliminer le premier jet de la traite correspondante.
